# EUROPEAN PATENT APPLICATION

(11) **EP 2 451 176 A2**
(43) Date of publication of application: **09.05.2012**
(21) Application number: 11187860.9
(22) Date of filing: 04.11.2011
(51) Int. Cl.: H04N 13/00, H04N 7/15

(54) **3d video communication apparatus and method for video processing of 3d video communication apparatus**

(30) Priority: 05.11.2010 KR 20100109849
(71) Applicant: Samsung Electronics Co., Ltd., Suwon-si, Gyeonggi-do 442-742 (KR)
(72) Inventor: Kim, Sang-yoon, Gyeonggi-do (KR); Ryu, Hee-seob, Gyeonggi-do (KR); Kim, Yeun-bae, Gyeonggi-do (KR); Park, Seung-kwon, Gyeonggi-do (KR); Jang, Jong-hyuk, Gyeonggi-do (KR)
(74) Representative: Fearnside, Andrew Simon

(57) **Abstract**

A video communication method includes: acquiring a plurality of 2D images corresponding to a talker using a 3D camera; adjusting a point of convergence of the plurality of 2D images using a feature point of the talker; detecting an object located between the talker and the 3D camera using the acquired plurality of 2D images; scaling an original sense of depth of the detected object to a new sense of depth; and generating a 3D talker image including the object with the new sense of depth and transmitting the 3D talker image to a 3D video communication apparatus of a listener.

## Description

### CROSS-REFERENCE TO RELATED APPLICATION

This application claims priority from Korean Patent Application No. 10-2010-0109849, filed November 5, 2010, in the Korean Intellectual Property Office, the disclosure of which is incorporated herein by reference in its entirety.

### BACKGROUND

### 1. Field

Apparatuses and methods consistent with exemplary embodiments relate to three dimensional (3D) video communication apparatus and method for video processing thereof.

### 2. Description of the Related Art

A video communication apparatus enables video communication between a talker and a listener using a camera, a microphone or a speaker.

For example, a video communication apparatus with one camera can provide two dimensional (2D) video communication between a talker and a listener. A video communication apparatus using a plurality of cameras can provide 3D video communication using a plurality of videos, for example, left-side videos and right-side videos.

A video communication apparatus generates the sense of depth of a 3D video using captured left-side video and right-side video. The implementation of the 3D video can generally be categorized into glasses type and non-glasses type.

The glasses type generally includes passive type, active type and anaglyph type. The non-glasses type generally includes lenticular type and parallax barrier type.

### SUMMARY

Exemplary embodiments may address at least the above problems and/or disadvantages and other disadvantages not described above. Also, exemplary embodiments are not required to overcome the disadvantages described above, and an exemplary embodiment of the present inventive concept may not overcome any of the problems described above.

According to the present invention there is provided an apparatus and method as set forth in the appended claims. Other features of the invention will be apparent from the dependent claims, and the description which follows.

According to an aspect an exemplary embodiment, there is provided a video communication method of a (3D video communication apparatus connectable to a 3D camera may be provided, which may include acquiring a plurality of 2D images corresponding to a talker using the 3D camera, adjusting a point of convergence of the plurality of 2D images using a preset feature point of the talker, detecting an object located between the talker and the 3D camera using the acquired plurality of 2D images, scaling an original sense of depth of the detected object to a new sense of depth, and generating a 3D talker image including the object with the new sense of depth and transmitting the 3D talker image to a 3D video communication apparatus of a listener.

According to another aspect of an exemplary embodiment, the video communication method may additionally include setting the feature point of the talker, wherein the feature point may include at least one of eyes, nose, lips, ears and eyebrows of the talker.

According to another aspect of an exemplary embodiment, the video communication method may additionally include receiving a 3D listener image from the 3D video communication apparatus of the listener, and displaying the 3D listener image or the 3D talker image on a display unit.

According to another aspect of an exemplary embodiment, the 3D camera may be a stereoscopic camera or a depth camera unit.

According to another aspect of an exemplary embodiment, the video communication method may additionally include computing a distance between the 3D camera and the talker, wherein the distance may be computed using disparity or depth information of the plurality of 2D images.

According to another aspect of an exemplary embodiment, the 3D talker image may be displayed on a reference plane of a display unit of the 3D video communication apparatus of the listener, and an object having the new sense of depth may be displayed on a front side of the reference plane (+z axis direction) distinguishably from the 3D talker image.

According to another aspect of an exemplary embodiment, an object having the new sense of depth is displayed on a reference plane of the display unit of the 3D video communication apparatus of the listener, and the 3D talker image is displayed on a back side of the reference plane (-z axis direction) distinguishably from the object with the adjusted sense of depth.

According to another aspect of an exemplary embodiment, the adjusting may include adjusting by shifting a left-side image and a right-side image acquired from the stereoscopic camera or the depth camera unit using the preset feature point, or rotating at least one of light axes of a left-side camera and a right-side camera of the stereoscopic camera.

According to another aspect of an exemplary embodiment, the scaling may include enlarging or shifting the detected object of a left-side image and the detected object of a right-side image acquired from the stereoscopic camera or the depth camera unit, or adjusting at least one distance from among a light axis of a left-side camera and a light axis of a right-side camera of the stereoscopic camera.

According to another aspect of an exemplary embodiment, the scaling may include enlarging, by adding a predetermined ratio corresponding to a size of the detected object of a left-side image and a size of the detected object of a right-side image acquired at the stereoscopic camera or the depth camera unit, or enlarging the detected object of the left-side image and the detected object of the right-side image to a predetermined size.

According to another aspect of an exemplary embodiment, the 3D camera may be integrally formed in the 3D video communication apparatus.

According to another aspect of an exemplary embodiment, there is provided a video communication method of a 3D video communication apparatus connectable to a 3D camera, which may include acquiring a plurality of 2D images corresponding to a talker using the 3D camera, generating a first 3D talker image by adjusting a point of convergence of the plurality of 2D images using a preset feature point of the talker, detecting an object located between the talker and the 3D camera, scaling an original sense of depth of the detected object to a new sense of depth, transmitting a second 3D talker image containing the object with the new sense of depth to a 3D video communication apparatus of a listener, and receiving a 3D listener image from the 3D video communication apparatus of the listener and displaying a first 3D talker image or the 3D listener image containing the object with the original sense of depth on the display unit.

According to another aspect of an exemplary embodiment, the video communication method may additionally include computing a distance between the 3D camera and the talker.

According to another exemplary embodiment, a video communication method of a 3D video communication apparatus connectable to a 3D camera may be provided, which may include acquiring a plurality of 2D images corresponding to a talker using the 3D camera, adjusting a point of convergence of the plurality of 2D images using a preset feature point of the talker, distinguishing between a first region corresponding to the talker and a second region between the talker and the 3D camera, detecting an object located between the talker and the 3D camera, scaling an original sense of depth of the detected object to a new sense of depth, and generating a 3D talker image including the object with the new sense of depth.

According to another aspect of an exemplary embodiment, the detecting the object between the talker and the 3D camera may include dividing the detected object into separate layers.

According to another aspect of an exemplary embodiment, the video processing method may additionally include transmitting the 3D talker image to a 3D video communication apparatus of a listener, and receiving a 3D listener image from the 3D video communication apparatus of the listener, wherein the received 3D listener image or the 3D talker image is displayed on the display unit.

According to another aspect of an exemplary embodiment, the 3D talker image may be displayed on a reference plane of a display unit of the 3D video communication apparatus and the object with the new sense of depth may be displayed on a front side of the reference plane (+z axis direction) distinguishably from the 3D talker image, or the object with the new sense of depth may be displayed on the reference plane of the display unit, and the 3D talker image may be displayed on a back side of the reference plane (-z axis direction) distinguishably from the object with the new sense of depth.

According to another aspect of an exemplary embodiment, the video processing method may additionally include computing a distance between the 3D camera and the talker.

According to another aspect of an exemplary embodiment, the 3D camera may be a stereoscopic camera or a depth camera unit.

According to another aspect of an exemplary embodiment, there is provided a 3D video communication apparatus including a display unit which displays a 3D image, which may include a storage unit, and a control unit which controls the 3D camera and the storage unit, wherein the control unit adjusts a point of convergence of a plurality of 2D images using a preset feature point of a talker, detects an object located between the talker and the 3D camera, scales an original sense of depth of the detected object to a new sense of depth, and generates a 3D talker image including the object with the new sense of depth from the plurality of 2D images.

According to another aspect of an exemplary embodiment, the 3D video communication apparatus may additionally include a transmitting/receiving unit which transmits the 3D talker image to a 3D video communication apparatus of a listener at video communication with the talker and receives a 3D listener image from the 3D video communication apparatus of the listener, wherein the display unit displays the 3D talker image or the received 3D listener image.

According to another aspect of an exemplary embodiment, the display unit may display a user interface (Ul) screen to set a feature point of the talker and the feature point may be inputted using the Ul screen.

According to another aspect of an exemplary embodiment, the control unit may compute a distance between the 3D camera and the talker using the plurality of 2D images and detect the object using the computed distance.

According to another aspect of an exemplary embodiment, there is provided a 3D video communication apparatus including a display unit which displays a 3D image, which may include a 3D camera which acquires a plurality of 2D images corresponding to a talker, a storage unit, and a control unit which controls the 3D camera and the storage unit, wherein the control unit adjusts a point of convergence of the plurality of 2D images using the preset feature point of the talker, distinguishes between a first region corresponding to the talker and a second region between the talker and the 3D camera, detects the object in the second region, scales an original sense of depth of the detected object to a new sense of depth, and generates a 3D talker image including the object with the new sense of depth from the plurality of 2D images.

According to another aspect of an exemplary embodiment, the 3D video communication apparatus may additionally include a transmitting/receiving unit which transmits the 3D talker image to a 3D video communication apparatus of a listener at video communication with the talker, and receives a 3D listener image from the 3D video communication apparatus of the listener, wherein the display unit displays the 3D talker image or the 3D listener image.

According to another aspect of an exemplary embodiment, the control unit may compute a distance between the 3D camera and the talker using the plurality of 2D images and detect the object using the computed distance.

According to another aspect of an exemplary embodiment, the 3D talker image may be displayed on a reference plane of a display unit of the 3D video communication apparatus of the talker, and the object with the new sense of depth may be displayed on a front side (+z axis direction) of the reference plane distinguishably from the 3D talker image, or the object with the new sense of depth may be displayed on the reference plane of the display unit and the 3D talker image may be displayed on a back side of the reference plane (-z axis direction) distinguishably from the object with the new sense of depth.

A 3D video communication apparatus, which generates a 3D talker image containing an object with a new sense of depth located between a talker and a 3D camera, and transmits the generated 3D talker image to provide a differentiated 3D video effect to a listener in front of the 3D video communication apparatus of the listener, and a video control method thereof are provided.

A 3D video communication apparatus, which may selectively display first to third 3D talker images generated at a 3D video communication apparatus of a talker, on a display of the 3D video communication apparatus of the talker, and a video control method thereof are provided.

A 3D video communication apparatus, which can selectively transmit second and third 3D talker images generated at a 3D video communication apparatus of a talker, to display on a display unit of a 3D video communication apparatus of a listener, and a video control method thereof are provided.

### BRIEF DESCRIPTION OF THE DRAWINGS

The above and/or other aspects will become more apparent by describing certain exemplary embodiments, with reference to the accompanying drawings, in which:
FIG. 1 is a block diagram of a 3D video communication apparatus according to an exemplary embodiment;
FIG. 2 is a flowchart provided to explain a method for controlling video on a 3D video communication apparatus according to an exemplary embodiment;
FIG. 3 is a flowchart provided to explain in detail an operation performed at operation S230 of FIG. 2 according to an exemplary embodiment;
FIGS. 4A and 4B are views illustrating user interface screens of a 3D video communication apparatus according to an exemplary embodiment;
FIG. 5 illustrates a processing method of a stereoscopic camera of a 3D video communication apparatus according to an exemplary embodiment;
FIG. 6 illustrates a processing method of a stereoscopic camera of a 3D video communication apparatus according to an exemplary embodiment;
FIG. 7 illustrates a processing method of a depth camera unit a 3D video communication apparatus according to an exemplary embodiment;
FIGS. 8A to 8D illustrates a 3D camera according to an exemplary embodiment; and
FIG. 9 illustrates an example of displaying a result of video processing of a 3D video communication apparatus at a talker side on a 3D video communication apparatus at a listener side, according to an exemplary embodiment.

### DETAILED DESCRIPTION OF EXEMPLARY EMBODIMENTS

**C**ertain exemplary embodiments are described in greater detail below with reference to the accompanying drawings.

In the following description, like drawing reference numerals are used for the like elements, even in different drawings. The matters defined in the description, such as detailed construction and elements, are provided to assist in a comprehensive understanding of exemplary embodiments. However, exemplary embodiments can be carried out without those specifically defined matters. Also, well-known functions or constructions are not described in detail since they would obscure the invention with unnecessary detail.

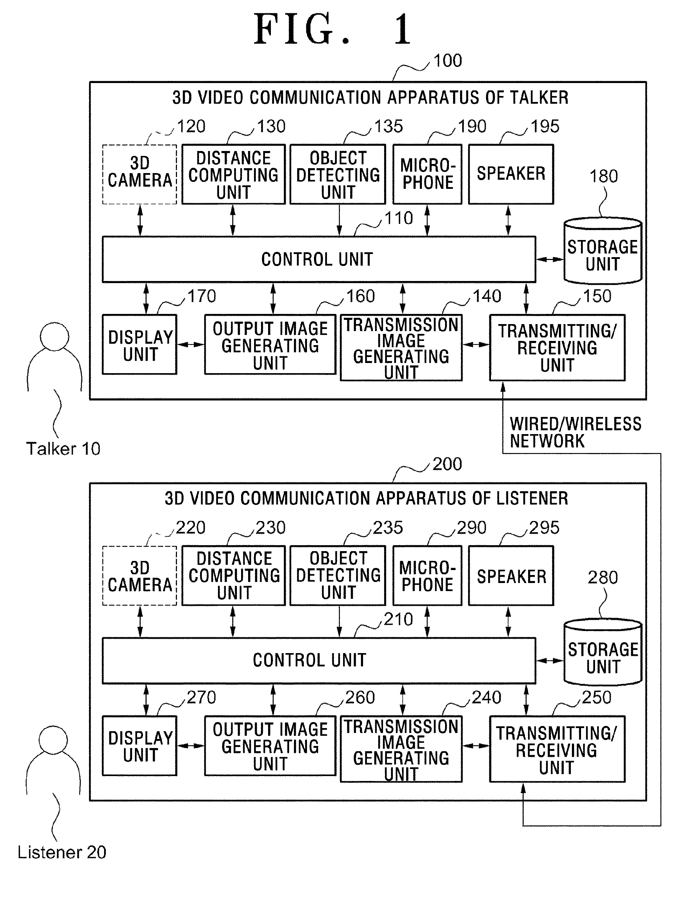

FIG. 1 is a block diagram of a 3D video communication apparatus or 3D video communication system according to an exemplary embodiment.

Referring to FIG. 1, the 3D video communication apparatus 100, 200 according to an exemplary embodiment can connect to a wired or wireless network. The 3D video communication apparatus 100 on the talker's side is connectable to the 3D video communication apparatus 200 overwired/wireless network.

The 3D video communication apparatus encompasses the 3D video communication apparatus 100 on the talker's side and the 3D video communication apparatus 200 on the listener's side.

The 3D video communication apparatus 100 may be connected to at least one computer (not illustrated) including a server, at least one image forming apparatus (not illustrated) and/or at least one portable apparatus (not illustrated) over wired/wireless network.

The image forming apparatus (not illustrated) may include a variety of apparatuses including a copier, a printer, a facsimile, a scanner, or a multi-function peripheral (MFP) that outputs image data. The MFP may have a plurality of functions including copying, printing, scanning, fax transmission, e-mail transmission, or file transmission.

The portable apparatus (not illustrated) may include a mobile phone, a smartphone, a digital camera, an e-book reader, a tablet PC or a portable storage medium such as USB memory or memory card, but not limited thereto.

The external apparatus may include a computer including a server, an image forming apparatus, or a portable apparatus.

The server may include a web server that supports web service or a data server that stores data.

The 3D video communication apparatus 100 may include a control unit 110, a 3D camera 120, a distance computing unit 130, an object detecting unit 135, a transmission image generating unit 140, a transmitting/receiving unit 150, an output image generating unit 160, a display unit 170, a storage unit 180, a microphone 190, and a speaker 195.

The control unit 110 may include a CPU (not illustrated), a ROM having recorded thereon a control program, and a RAM (not illustrated) used to memorize input data or used as an operation-related memory area. The CPU, the ROM and the RAM may be interconnected with each other via an internal bus.

The control unit 110 may control the storage unit 180, the 3D camera 120, the distance computing unit 130, the object detecting unit 135, the display unit 140, the output image generating unit 150, the transmission image generating unit 160, the transmitting/receiving unit 170, the microphone 190, and the speaker 195.

The 3D camera 120 may capture a plurality of first 2D images, including first left-side images 500, 600, 700 and first right-side images 505, 605, 706, corresponding to a talker 10 to implement a 3D communication.

The a plurality of captured 2D images 500, 505, 600, 605, 700, 705 may refer to one dimensional (1 D) and 2D images.

The talker 10 herein may include the talker 10 himself positioned opposite to the 3D camera 120 or the background surrounding the talker 10. The talker 10 alone, or the background alone without the talker therein, or both the talker 10 and the background may be positioned opposite the 3D camera 120.

The term "capture" or "acquire" of the 3D camera 120 herein may refer to the same meaning.

The first 2D image captured through the 3D camera 120 may be stored at the storage unit 180 according to the control by the control unit 110.

The 3D camera 120 may capture a plurality of 2D images successively according to the 3D video communication between the talker 10 and the listener 20, and the plurality of successively-captured 2D images may be stored at the storage unit 180.

The 3D camera 120 according to an exemplary embodiment may be positioned on an upper portion of the display unit 170, or in other places depending on applications.

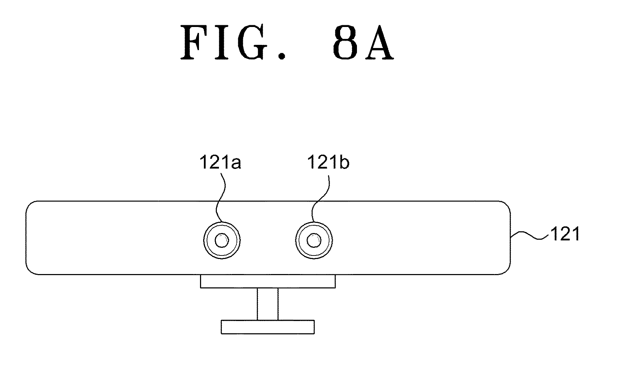

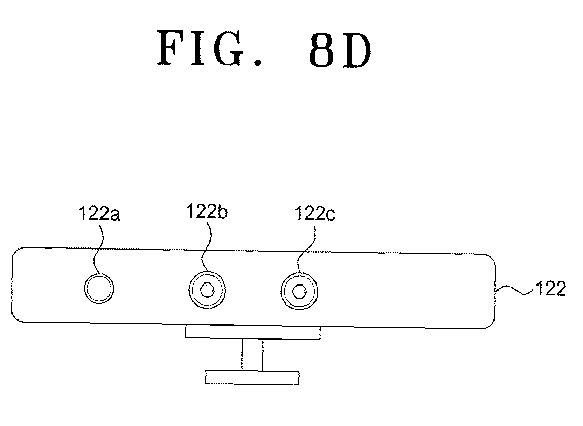

The 3D camera 120 according to an aspect of an exemplary embodiment is described below with reference to FIGS. 8A to 8D.

FIGS. 8A to 8D are views illustrating the 3D camera 120 according to an aspect of an exemplary embodiment.

Referring to FIGS. 8A to 8D, the 3D camera may be a stereoscopic camera 121 including a left-side camera 121a which captures first left-side images 500, 600 of the talker 10, and a right-side camera 121b which captures first right-side images 505, 605 of the talker 10.

The 3D camera may also include a depth camera unit 122 which includes an infrared (IR) sensor 122a, a depth camera 122b which acquires depth information using a time for an infrared ray emitted from the IR sensor 122a to touch and reflect from the talker 10 and be received back, and a camera 122c to capture the first 2D image 700 of the talker 10.

The depth camera unit 122 may detect the shape of the talker 10 using the received reflected light. The depth camera unit 122 may compute a distance from the depth camera unit 122 to the talker 10 using the time of flight (TOF) of the IR light emitted from the IR sensor 122a and reflected at the talker 10 and received at the depth camera 122b.

The received reflected light may be passed through a filter (not illustrated) or a beam splitter (not illustrated) and sensed at the depth camera 122b as the grayscale data which corresponds to the distance to the talker 10.

The sensed grayscale data may be converted into depth information and stored at the storage unit 180 as the 2D image 705.

The 2D image 705 corresponding to the depth information appears brighter if it is closer to the depth camera 122b or darker if farther from the depth camera 122b.

An object positioned between the talker 10 and the depth camera 122b, for example, a hand of the talker 10, a gift box, or the like, may appear brighter than the talker 10.

The gift box laid on the hand of the talker 10 may appear darker than the talker 10, if the gift box is behind the talker 10, that is, for example, between the talker 10 and the background.

The 3D camera 120 refers to a camera which is capable of capturing the first 2D image corresponding to the talker 10. Any camera other than the stereoscopic camera 121 or the depth camera unit 122 may be implemented as the 3D camera 120 as long as the camera is capable of capturing a plurality of 2D images corresponding to the talker 10.

The 3D camera 120 may be separately provided and connected to the 3D video communication apparatus 100 via wired/wireless network, or formed as all-in-one unit.

The distance computing unit 130 may compute a distance between the 3D camera 120 and the talker 10 using the first 2D image captured through the 3D camera 120.

With respect to the stereoscopic camera 121, the distance computing unit 130 may compute the distance from the stereoscopic camera 121 to the talker 10 using disparity between the first left-side images 500, 600 captured through the left-side camera 121a and the first right-side images 505, 605 captured through the right-side camera 121 b.

The distance using disparity between the first left-side images 500, 600 and the first right-side images 505, 605 may be computed using a variety of known algorithms.

With respect to the depth camera unit 122, the distance computing unit 130 may compute distance from the depth camera unit 122 to the talker 10 using TOF of a IR light emitted from the IR sensor 122a and reflected and received at the depth camera 122b.

The distance computing unit 130 may additionally compute distance to the talker 10 from the 3D camera which captures the first 2D image corresponding to the talker 10, in addition to computing distance from the stereoscopic camera 121 or the depth camera unit 122 to the talker 10.

The object detecting unit 135 may distinguish between a first region that corresponds to the talker 10 and a second region 531, 536, 631, 636, 731, 736 that includes a predetermined distance between the talker 10 and the 3D camera 120, and detect an object 541, 546, 641, 646, 741, 746 located within the second region 531, 536, 631, 636, 731, 736.

For example, the predetermined distance may be 1 m. The predetermined distance may vary depending on the setting of the 3D video communication apparatus.

The distinguished second region that includes the predetermined distance may refer to the 3D region (corresponding to x, y and z axes) that corresponds to a plurality of 2D images 530,535,630,635,730,735.

The distinguished second region may include a plurality of regions, and at least one from among the second regions may be varied depending on the setting of the 3D communication apparatus.

In an exemplary embodiment, the object detecting unit 135 may detect an object 541, 546 located in the second region at 1 m distance from the talker 10 to the direction of the 3D camera 120.

With respect to the stereoscopic camera 121, the object detecting unit 135 may detect the object 541, 546, 641, 646 located in the second area 531, 536, 631, 636 at 1 m distance based on the left-side images 530, 630 and the right-side images 535, 635.

In another exemplary embodiment, layers may be divided from an object which is detected from the corresponding region.

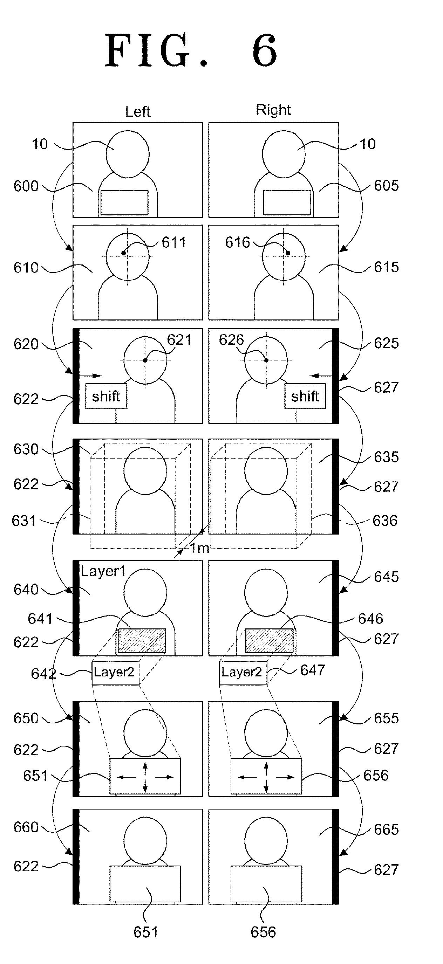

Referring to FIG. 6, the 3D video communication apparatus 100 may detect an object 641, 646 located within the second region 631, 636 from first layers of a plurality of 2D images 640, 645 with adjusted points of convergence. Further, the 3D video communication apparatus 100 may generate second layers corresponding to the detected object 641, 646.

Higher efficiency of video processing may be obtained, by adjusting the sense of depth of the object 642, 647 that corresponds to the second layers. The embodiment in which separate layers are generated may be appropriately applicable to a rather complex object.

With respect to the depth camera unit 122, the object detecting unit 135 may detect the object 741, 746 located in the second region 731, 736 at 1m distance between the talker 10 and the depth camera unit 122 of the plurality of 2D images 730, 735.

The types and sizes of the objects 541, 546, 641, 646, 741, 746 detected at the object detecting unit 135 may vary according to the setting of the 3D video communication apparatus 100.

If the 3D camera 120 does not detect a plurality of objects, objects of the target may be designated by setting the 3D video communication apparatus 100 accordingly.

The transmission image generating unit 140 may generate second 2D images 520, 525, 620, 625, 720, 725 by adjusting point of convergence with respect to the first 2D image or adjust the point of convergence, and generate third 2D images 560, 565, 660, 665, 760, 765, 10a by carrying out adjustment of sense of depth.

The second 2D images may correspond to the first 3D talker images. Also, the third 2D images may correspond to the second 3D talker images.

The generated third 3D talker images may be transmitted to the 3D video communication apparatus 200 of the listener 20 via the transmitting/receiving unit 150 of the 3D video communication apparatus 100 of the talker 10.

The point of convergence may be adjusted as predetermined feature points 511, 516, 611, 616, 711, 716 may be detected from the first 2D image, and a plurality of 2D images 510, 515, 610, 615, 710, 715 is shifted using the detected feature points 511, 516, 611, 616, 711, 716.

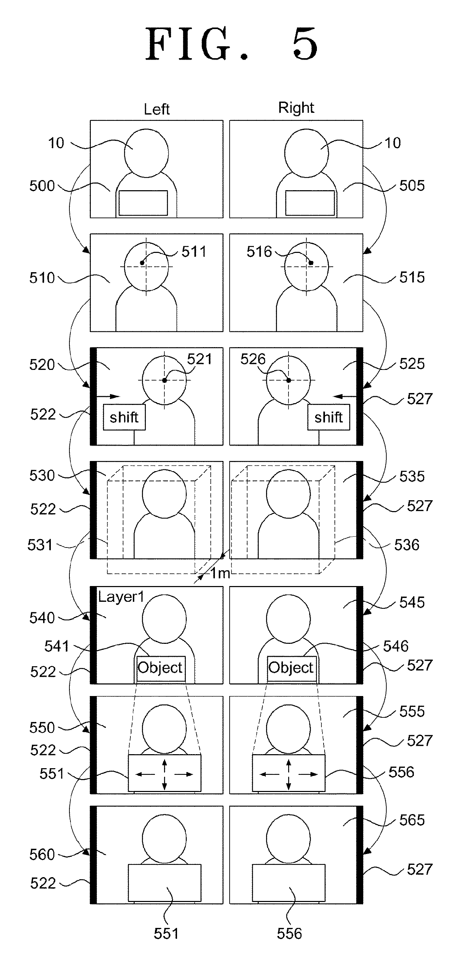

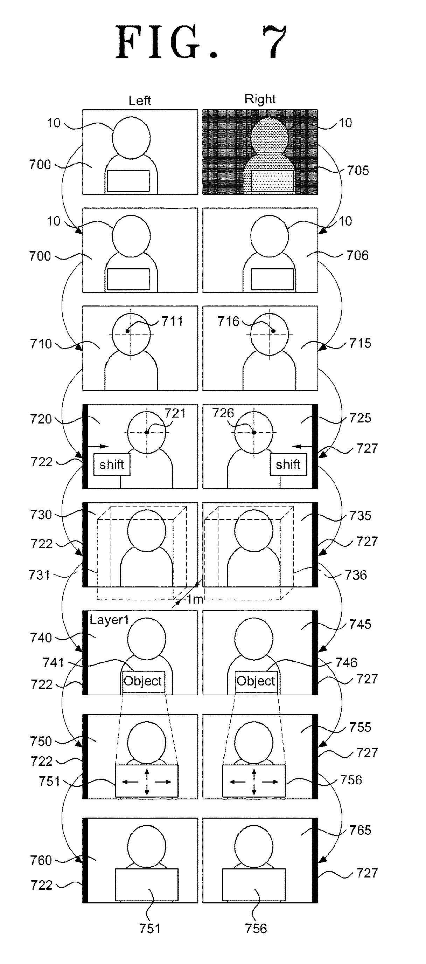

Reference numerals 520, 525 of FIG. 5, 620, 625 of FIG. 6, and 720, 725 of FIG. 7 may refer to the second 2D images.

The empty regions 522, 527, 622, 627, 722, 727 may appear in black.

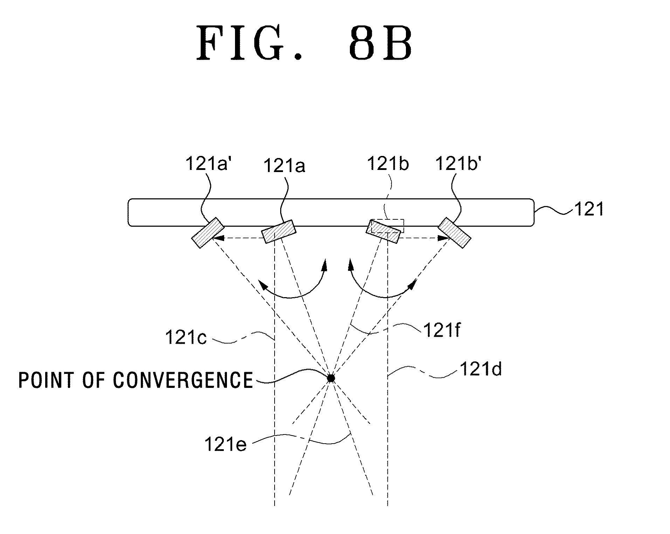

The point of convergence adjustment is described below with reference to FIG. 8B.

Referring to FIG. 8B, the first left-side images 500, 600 and the first right-side images 505, 605 may be captured using a light axis 121c of the left-side camera 121 a and a light axis 121 d of the right-side camera 121 b of the stereoscopic camera 121.

The preset feature points 511, 516, 611, 616 are detected from the first 2D images, and the point of convergence may be adjusted using the detected feature points 511, 516, 611, 616.

Regarding hardware, a driving unit (not illustrated) may be implemented, which may include a motor (not illustrated) and a gear train (not illustrated) to rotate the light axes corresponding to the left-side camera 121 a and the right-side camera 121 b.

The control unit 110 may adjust the point of convergence by rotating at least one of the light axis 121c of the left-side camera 121a and the light axis 121d of the right-side camera 121b to a position of new light axes 121e, 121 For example, only the light axis 121c of the left-side camera 121 a may be rotated. Further, both the light axis 121c of the left-side camera 121 a and the light axis 121d of the right-side camera 121b may be rotated together.

The sense of depth of the left-side image of the left-side camera 121a and that of the right-side image of the right-side camera 121b may be adjusted within an adjustment limit 121 c(for example, left-side camera 121a may be moved to 121 a', right-side camera may be moved to 121 b')as movable by the left-side and right-side cameras 121 a, 121 b.

If a distance between the left-side and right-side cameras 121 a, 121b increases, the disparity increases accordingly. If the distance between the left-side and right-side cameras 121 a, 121b decreases, the disparity decreases accordingly.

Referring back to FIG. 1, the second 2D image may be stored at the storage unit 180 according to the control of the control unit 110.

In another exemplary embodiment, the transmission image generating unit 140 may generate the second 2D image and the generated second 2D image may be the first 3D talker image displayed on the display unit 170 of the 3D video communication apparatus 100.

The transmission image generating unit 140 may adjust the original sense of depth of the object 541, 546, 641, 646, 741, 746 detected by the object detecting unit 135 with a new sense of depth.

Regarding the adjustment the sense of depth, the transmission image generating unit 140 may enlarge the detected object 541, 546, 641, 646, 741, 746 to a new size or shift the detected object 541, 546, 641, 646, 741, 746.

Accordingly, the objects 541, 546, 641, 646, 741, 746 included in the plurality of 2D images may be enlarged or shifted in at least one direction, as for example, in direction of +x axis, -x axis, +y axis, -y axis with respect to the center of the objects.

In yet another exemplary embodiment, if layers are divided, the transmission image generating unit 140 may maintain the original sense of depth with respect to a plurality of 2D images 640, 645 corresponding to the first layers, and adjust to the new sense of depth regarding the objects 642, 647 corresponding to the second layers. The detected objects 641, 646 may be increased to a new size or shifted.

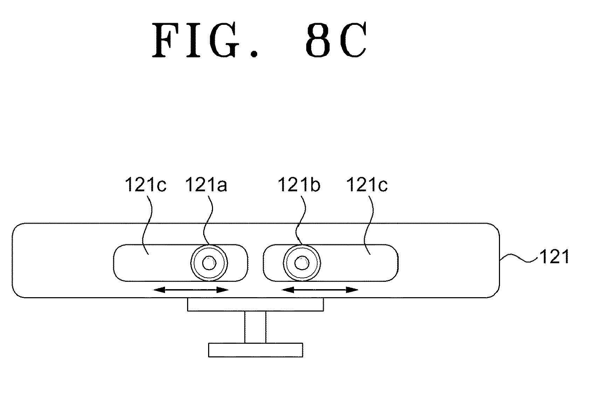

The adjustment of the sense of depth is described below with reference to FIGS. 8B and 8C.

Referring to FIG. 8C, in the stereoscopic camera 121, interocular distance (ID) between the left-side camera 121 a and the right-side camera 121b may be adjusted according to the control of the control unit 110. Accordingly, the sense of depth of the left-side image of the left-side camera 121 a and the right-side image of the right-side camera 121b may be adjusted within an adjustment limit 121c as movable by the left-side camera 121a and the right-side camera 121 b.

A driving unit (not illustrated) may be implemented, which may include a motor (not illustrated) and a gear train (not illustrated) to adjust a distance between the left-side and right-side cameras 121 a, 121 b.

If a distance between the left-side and right-side cameras 121 a, 121b increases, the disparity increases accordingly. If the distance between the left-side and right-side cameras 121 a, 121b decreases, the disparity decreases accordingly.

Regarding the depth camera unit 122, the transmission image generating unit 140 may carry out adjustment of point of convergence and sense of feeling 760, 765 using a plurality of 2D images 700, 706 in a similar manner as implemented in the example of the stereoscopic camera 121.

The third 2D image may be stored at the storage unit 180 according to the control of the control unit 110.

The stored third 2D image may be transmitted to the 3D video communication apparatus 200 via the transmitting/receiving unit 150.

The 3D video communication apparatus 200 of the listener 20 may generate an output image 10a, 20a at the output image generating unit 260 based on the received second 3D talker image and the 3D talker image which is generated by capturing at the 3D camera 220, and display the output image on the display unit 270.

The transmission image generating unit 140 may generate a third 3D talker image by using the second 3D talker image, and transmit the generated third 3D talker image to the transmitting/receiving unit 250 of the 3D video communication apparatus 200 via the transmitting/receiving unit 150. The generated third 3D talker image 10a may be stored at the storage unit 180 according to the control of the control unit 110.

The third 3D talker image may confirm to the specification (e.g., size, resolution, contrast ratio of the display unit 270) as supported by the 3D video communication apparatus 200 of the listener 20 using wired/wireless network.

The third 3D talker image may be generated in accordance with the confirmed specification of the 3D video communication apparatus 200 of the listener 20.

The output image generating unit 260 of the 3D video communication apparatus 200 of the listener 20 may directly display the received third 3D talker image differently from the current format on the display unit 270 (e.g., the output image may be generated as a plurality of 2D output images).

The output image generating unit 260 may generate output image of the second 3D talker image using the current format, while the third 3D talker image may be displayed directly on the display unit 170, 270 as the output image 10a.

The second and third 3D talker images generated at the output image generating unit 160 may be displayed on the reference plane of the display unit 270 of the 3D video communication apparatus, and the object 920 with a new sense of depth may be displayed distinguishably from the reference plane in a direction of the listener 20 (i.e., +z axis direction) with respect to the reference plane of the front-display unit 270.

The output image generating unit 260 may display the object 920 having a new sense of depth on the reference plane of the display unit 270 of the 3D video communication apparatus 200 of the listener 20, while displaying the 3D talker image distinguishably from the reference plane in a direction opposite to the listener 20 (i.e., -z axis direction) with respect to the reference plane of the back-display unit 270.

Depending on the setting of the 3D video communication apparatus, the transmitting/receiving unit 150 may selectively transmit the stored second or third 3D talker image or voice to the transmitting/receiving unit 250 of the 3D video communication apparatus 200 of the listener 20 using wired/wireless network.

The transmitting/receiving unit 150 may encode the second or third 3D talker image or voice into a transmission format corresponding to the wired/wireless network before transmitting the same.

Depending on the setting of the 3D communication apparatus, the transmitting/receiving unit 150 may transmit the stored second or third 3D talker image or voice to the transmitting/receiving unit of a plurality of 3D video communication apparatuses of the listeners. Accordingly, one talker may communicate with a plurality of listeners by a 3D video communication.

Depending on the setting of the 3D video communication apparatus 200 of the listener 20, the transmitting/receiving unit 150 may receive second and third 3D listener image and voice corresponding to the second and third 3D talker image. The transmitting/receiving unit 150 may decode the encoded second or third 3D talker image or voice in the transmission format corresponding to the wired/wireless network into the second or third 3D talker image or voice.

The decoded second or third 3D talker image or voice may be stored at the storage unit 180.

The transmitting/receiving unit 150 may transmit the first 3D image stored at the storage unit 180, or the generated first to third 3D talker images to an external apparatus using wired/wireless network according to the control of the control unit 110. The received second and third 3D listener image may also be transmitted to the external apparatus.

If the first 2D image or the generated first to third 3D talker images are transmitted to a computer or portable apparatus that includes server, the transmitted images may be stored at the storage unit of the computer or the portable apparatus, and displayed on the display unit.

The first 2D image or the generated first to third 3D talker images may be edited using 2D or 3D editing program of the computer or portable apparatus that includes server.

Further, if the first 2D image, or the generated first and second 3D talker images, or the received first and second 3D listener images are transmitted to an image forming apparatus, the transmitted images may be printed out on a recording medium supported by the image forming apparatus.

The output image generating unit 160 may generate output images 10a, 20a to be displayed on the display unit 170. The output images 10a, 20a may include the first to third 3D talker images generated at the transmission image generating unit 140 or the second or third 3D listener image received at the transmitting/receiving unit 150.

The output image generating unit 160 may display the second or third 3D talker image and the received second or third 3D listener image as the output images 10a, 20a on the display unit 170, in accordance with the size of the display unit 170, size (horizontal x vertical) of the talker display region 170a and size (horizontal x vertical) of the listener display region 170b of the display unit 170, and the position of display.

Depending on the setting of the 3D video communication apparatus, the output image generating unit 160 may generate a new output image 10a or 20a in accordance with the size and position of display of the display unit 170, or the size of the talker display region 170a and position of display.

The output image generating unit 160 may cause the third 3D talker image and the third 3D listener image stored at the storage unit 180 to be displayed on the display unit 170 as an output image. The output image may be converted to conform to the size of the display unit 170, the size of the talker display region 170a or listener display region 170b, and the position of display.

In another exemplary embodiment, the output image generating unit 160 may generate an output image 10b by using the second 2D image (i.e., first 3D talker image) and display the generated image on the talker display region 170a of the display unit 170.

The output image 20b corresponding to the second and third 3D listener images may be displayed on the listener display region 170b.

The output image generating unit 160 may generate a 3D image 10a, 20a that corresponds to the glasses type or non-glasses type as supported by the 3D video communication apparatus 100.

In an exemplary embodiment, the transmission image generating unit 140 and the output image generating unit 160 may be implemented as one single image generating unit (not illustrated). The image generating unit (not illustrated) may generate first to third 3D talker images. The generated first to third 3D talker images or received second and third 3D listener images may be generated as the output images 10a, 10b or output image 20a to be displayed on the display unit 170.

The display unit 170 may display at least one of the talker display region 170a and the listener display region 170b. For example, the display unit 170 may display only the talker display region 170a, or only the listener display region 170b, or both the talker and listener display regions 170a, 170b.

The size, such as the size ratio %, and the position, such as upper, lower, left, right direction, of the talker or listener display region 170a, 170b displayed on the display unit 170 may be set using 3D video communication item 420 on a menu 410 of the 3D video communication apparatus 100.

The display unit 170 may display 3D images 10a, 10b, 20a corresponding to the glasses or non-glasses type as supported by the 3D video communication apparatus 100.

The setting may be applied using remote controller (not illustrated) or if the display unit 170 is implemented as a touch screen, using touch input.

The storage unit 180 may store first to third 2D images according to the control of the control unit 110. Further, the storage unit 180 may store the first to third 3D talker images which are generated at the transmission image generating unit 140.

The storage unit 180 may store the output images 10a, 10b, 20a displayed on the display unit 170 of the 3D video communication apparatus 100.

The storage unit 180 may be integrated with the 3D video communication apparatus 100 or provided separately. Further, the storage unit 180 may include a nonvolatile memory, a volatile memory, a HDD or solid state drive (SSD).

The storage unit or storage unit 180 may include ROM (not illustrated) or RAM (not illustrated) built in the storage unit 180 or the control unit 110.

The microphone 190 receives voice of the talker 10 or voice from the background.

The 3D video communication apparatus 100 may include at least one microphone 190 and the direction of the microphone 190 may change in accordance with the location of the talker 10 who is moving.

The speaker 195 may output the voice of the talker 10 or the voice of the listener 20 in sync with the output images 10a, 20a, 20b displayed on the display unit 270. The 3D video communication apparatus 100 may include at least one speaker 195 and provide the talker 10 with various 3D sound according to the number or positions of the speakers 195.

If the 3D video communication apparatus 200 of the listener 20 displays the object 920 of the output image 10a having adjusted sense of depth, the speaker 295 may provide the corresponding audio such as music, thunder, or honking which is distinguished from the voice of the talker 10.

At least one of the 3D camera 120 and the display unit 170 may be separately provided from the 3D video communication apparatus 100, and the separate 3D camera 120 or the display unit 170 may be connected to the 3D video communication apparatus 100 by wired/wireless network.

If at least one of the 3D camera 120 and the display unit 170 is separately provided, the 3D video communication apparatus 100 may include the control unit 110, the storage unit 180, the distance computing unit 130, the object detecting unit 135, the transmission image generating unit 140, the transmitting/receiving unit 150, the output image generating unit 160, the microphone 290, and the speaker 295.

The 3D video communication apparatus 200 may include the control unit 210, the 3D camera 220, the distance computing unit 230, the object detecting unit 235, the transmission image generating unit 240, the transmitting/receiving unit 250, the output image generating unit 260, the display unit 270, the storage unit 280, the microphone 290 and the speaker 295.

The functions and structures of the components 210 to 295 of the 3D video communication apparatus 200 are similar to those of the components 110 to 195 of the 3D video communication apparatus 100 of the talker 10.

The 3D camera 220 of the 3D video communication apparatus 200 may capture a plurality of 2D images corresponding to the listener 20. The distance computing unit 230 may compute a distance from the 3D camera 220 to the listener 20 based on the plurality of captured 2D images.

Further, the 3D video communication apparatus 200 may detect an object located between the listener 20 and the 3D camera 220 by the object detecting unit 235 using the computed distance.

The 3D video communication apparatus 200 may adjust the point of convergence and sense of depth of the detected object and generate first to third 3D listener images at the output image generating unit 260.

Further, the 3D video communication apparatus 200 may receive the voice of the listener 20 or the sound from the background through the microphone 290.

The transmitting/receiving unit 250 may transmit the generated second or third 3D listener image or the voice of the listener to the 3D video communication apparatus 100 of the talker 10. Further, the transmitting/receiving unit 250 may receive the second or third 3D talker image or the voice of the talker 10 from the 3D video communication apparatus 100 of the talker 10.

The second or third 3D talker image or the voice of the talker 10 received from the 3D video communication apparatus 100 of the talker 10 may be stored at the storage unit 280.

The output image generating unit 260 may generate the received second 3D talker image into an output image and display the generated output image on the display unit 270. Further, the second 3D talker image may directly displayed on the display unit 270.

The output image generating unit 260 may generate the first to third 3D listener images into an output image and display the generated output image on the display unit 270. That is, The display unit 270 may display at least one of the talker display region 270a and the listener display region 270b. For example, the display unit 270 may display only the talker display region 270a, or only the listener display region 270b, or both the talker and listener display regions 270a, 270b.

If the second or third 3D talker image including an object with adjusted sense of depth is displayed on the display unit 270, the 3D audio effect distinguished from the listener 20 may be provided.

The speaker 295 may output the voice of the talker 10 or the listener 20 in sync with the output image 10a, 20a, 20b displayed on the display unit 270.

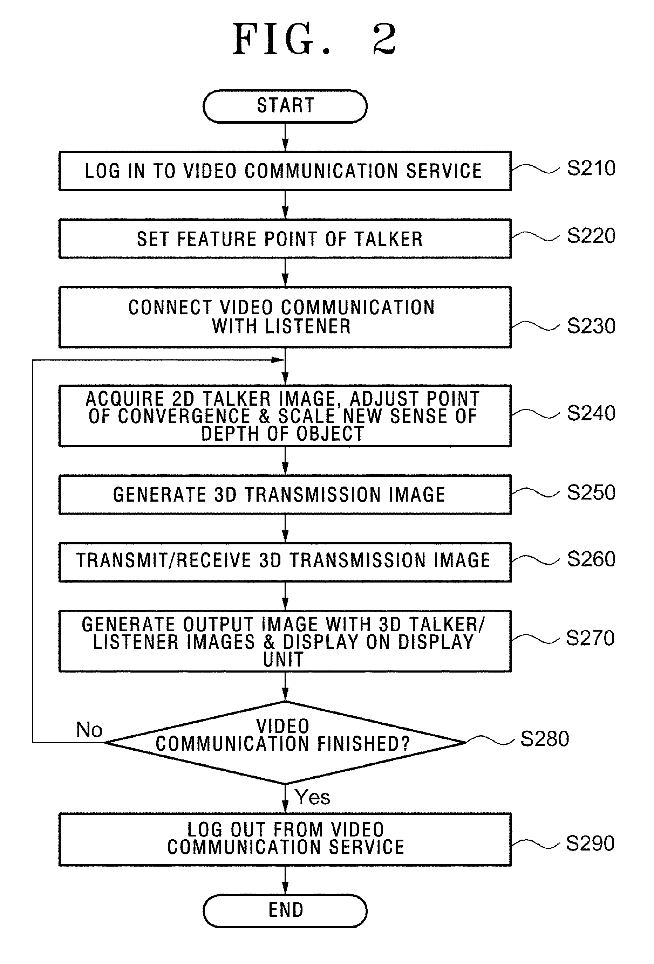

FIG. 2 is a flowchart provided to explain a video control method of a 3D video communication apparatus according to an exemplary embodiment.

At operation S210, the 3D video communication apparatus logs on to a 3D video communication service in accordance with the intention of the talker 10.

The talker 10 may log into the 3D video communication service by inputting his ID and password on a login screen displayed on the display unit 170.

The 3D video communication apparatus may provide the talker 10 with a user interface screen corresponding to the video communication service through the display unit 170.

When successfully completing login, the talker 10 may setup a setting for 3D video communication using the user interface screen (not illustrated) corresponding to the video communication service displayed on the display unit 170.

At operation S220, the 3D video communication apparatus sets the feature points of the talker 10.

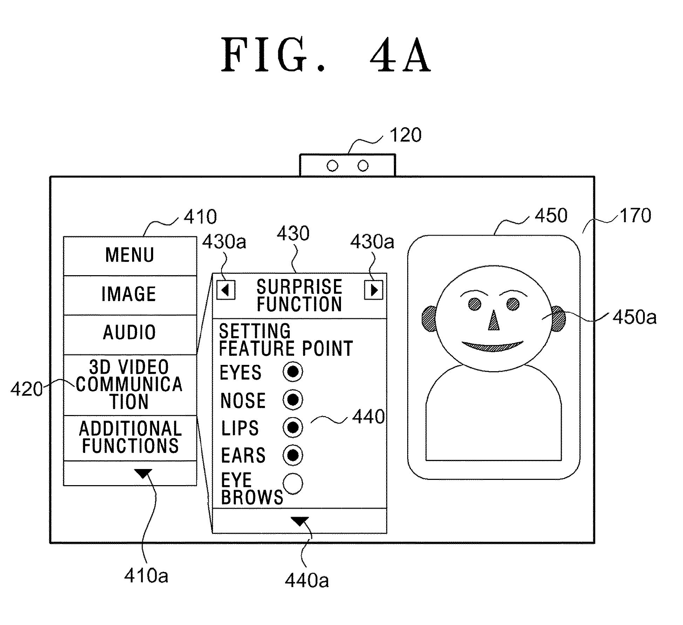

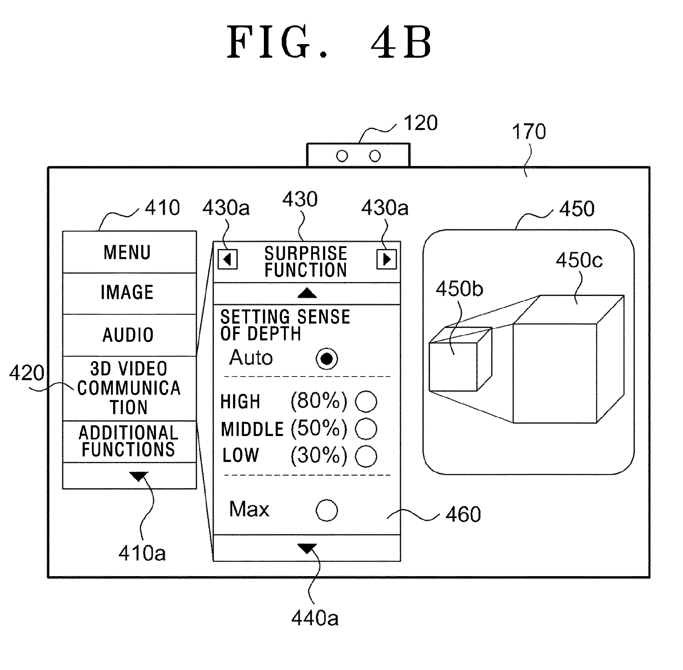

FIGS. 4A and 4B are views illustrating an example of the user interface screen for setting the 3D video communication apparatus according to an aspect of an exemplary embodiment.

Referring to FIG. 4A, the display unit 170 of the 3D video communication apparatus 100 may display a menu 410 for the setting.

The menu 410 may include items such as image, audio, 3D video communication, or additional functions, and may display the additional items of the menu 410 in response to selection on a direction key 410a.

The items on the menu 410 may vary depending on the functions supported by the 3D video communication apparatus 100.

If the 3D video communication 420 is selected from the menu 410, a surprise function menu 430 is displayed, and a setting feature point screen 440 is displayed. An additional item of 2D video communication 420 may be added by selecting the direction key 430a.

At least one of the targets for the feature points, i.e., at least one of the eyes, nose, lips, ears and eyebrows may be selected on the displayed setting feature point screen 440. For example, only the eyes, or both the eyes and nose, or all of the eyes, nose, lips, ears and eyebrows may be selected.

However, the type and number of the feature points are not limited to the eyes, nose, lips, ears or eyebrows. Accordingly, any feature point that can be set at the 3D video communication apparatus is applicable.

The selected feature point may be displayed on a preview 450a on a preview region 450 for observation by the talker 10.

By using the feature point setting 440, it is possible to adjust the point of convergence regarding the first 2D image which is captured through the 3D camera 120.

If the direction key 440a is selected from the displayed setting feature point screen 440, a screen for a sense of depth setting 460 may be displayed.

The target of the sense of depth setting screen 460 may be at least one object 910 located between the talker 10 and the 3D camera 120.

In an exemplary embodiment, the talker 10 or the listener 20 may provide distinguishable 3D video effect by the object 920 which is displayed on the display unit 170, 270 with a new sense of depth.

The selectable items on the sense of depth setting screen 460 may include Auto, High (80%), Middle (50%), Low (30%) or Max.

For Auto, the sense of depth may be set using at least one of the distance between the object 910 and the 3D camera 120, and the size of the object 910.

The values 80%, 50%, 30% set for High, Middle and Low may be set with reference to the maximum sense of depth (e.g., Max supported by the 3D video communication apparatus 100) and may vary depending on setting.

Max may be set at the maximum sense of depth as supported by the 3D video communication apparatus 100 and may vary depending on setting.

The selected sense of depth may be displayed on the preview region 450 illustrating the original sense of depth 450b of the object 910 and the new sense of depth 450c of the object 910 before and after the adjustment of the sense of depth.

The talker 10 may view the preview region 450 and add changes as necessary.

Referring to FIG. 2, at operation S230, the talker 10 connects to the counterpart of the video communication, i.e., to the listener 20 for the 3D video communication using the 3D video communication apparatus 100.

The talker 10 may select at least one listener 20 from a phonebook displayed on the display unit 170.

The talker may also attempt the 3D video communication with the listener 20 by directly inputting a telephone number using a telephone key displayed on the display unit 170 by, for example, inputting a telephone number through a remote controller (not illustrated) or touching the telephone number on the display unit 170 if the display unit 170 has a touchscreen.

The talker 10 may have 3D video communication with a plurality of listeners 20.

The talker 10 may connect to a plurality of listeners 20 for 3D video communication by selecting the listeners, based on a phonebook selection or directly inputting telephone numbers on the display unit 170.

During the 3D video communication with one listener 20, the talker 10 may attempt 3D video communication with a second listener by selecting the second listener in the phonebook or directly inputting telephone number on the display unit 170.

If the talker 10 is connected to a plurality of listeners 20, the output images corresponding to the talker 10 or the plurality of listeners 20 may appear on the display unit 170.

If the video communication is connected between the talker 10 and the listener 20, the 3D video communication begins.

Referring to FIG. 2, at operation S240, the transmission image generating unit 140 may adjust a point of convergence with respect to the first 2D image which is captured through the 3D camera 120.

The transmission image generating unit 140 may adjust a new sense of depth with respect to an object detected by the object detecting unit 135.

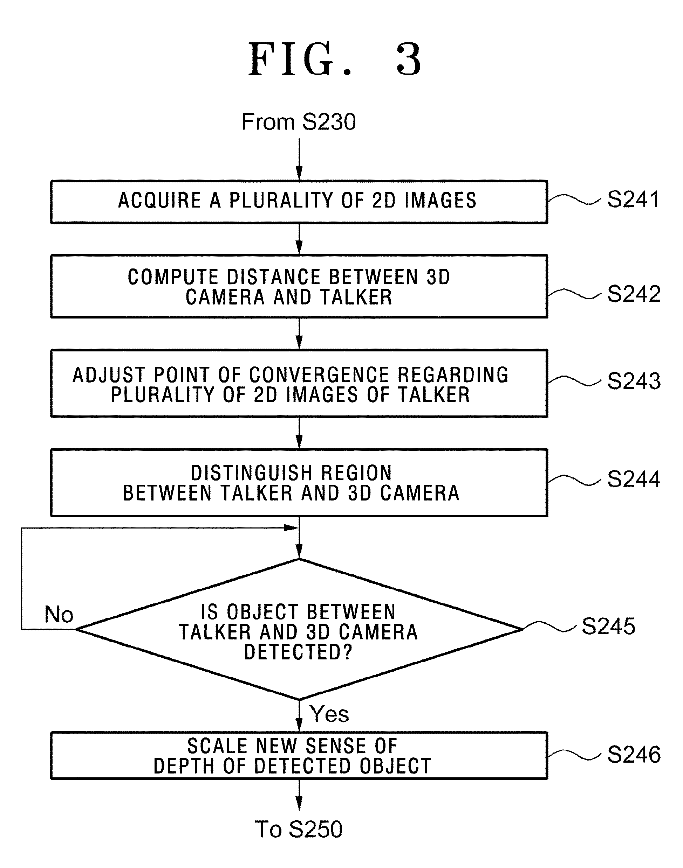

The operation S240 of FIG. 2 is described in greater detail below with reference to the flowchart of FIG. 3.

FIG. 3 is a flowchart illustrating in detail the process performed at operation S240 of FIG. 2 according to an aspect of an exemplary embodiment.

The operations S241 to S246 of FIG. 3 are described below with reference to FIGS. 5 to 7.

FIGS. 5 to 7 are views illustrating a video processing method of a stereoscopic camera and a depth camera unit of a 3D video communication apparatus according to an aspect of an exemplary embodiment.

Referring to FIG. 5, the left-side images 500 to 560 and the right-side images 505 to 565 of the stereoscopic camera 121 are illustrated. The images 510, 520, 530, 540, 550, and 560 correspond to the first left-side image 500. The images 515, 525, 535, 545, 555, and 565 correspond to the first right-side image 505. The images are divided into left-side and right-side images in order to explain the process of FIG. 5.

The same may apply to the first 2D images 600, 605 of FIG. 6 and the first 2D images 700, 706 of FIG. 7.

Referring to FIG. 3, at operation S241, the 3D video communication apparatus captures first 2D image using the 3D camera 120.

For the stereoscopic camera 121, the first 2D image may include the first left-side image 500, 600 of the left-side camera 121 a and the first right-side image 505, 605 of the right-side camera 121b each corresponding to the talker 10.

For the depth camera unit 122, the first 2D image may include a left-side image 700 corresponding to the camera 122c which captures the talker 10 and a right-side image 706 corresponding to an imaginary 2D image 705 which is generated using the left-side image 700 and depth information acquired from the depth camera 122b.

The 3D camera 120 may successively capture a plurality of the first 2D images for the 3D video communication.

At operation S242 of FIG. 3, a distance from the 3D camera 120 to the talker 10 is computed using the 3D video communication apparatus.

With respect to the stereoscopic camera 121, the distance computing unit 130 may compute the distance from the stereoscopic camera 121 to the talker 10 using disparity between the first left-side images 500, 600 and the first right-side images 505, 605, by using the preset feature points 511, 516, 611, 616 of the talker 10.

The distance using disparity between the left-side images and the right-side images may be computed using a variety of known algorithms.

With respect to the depth camera unit 122, the distance computing unit 130 may compute distance from the depth camera 122b to the talker 10 using TOF of an IR light emitted from the IR sensor 122a and reflected and received at the depth camera 122b.

The computed distance from the depth camera 122b to the talker 10 may be stored at the storage unit 180 as a separate lookup table. For example, the talker 10 may be recorded as being distanced from the depth camera unit 122 by 2m and the object may be recorded as being distanced from the depth camera unit 122 by 1.5m.

At operation S243 of FIG. 3, the 3D video communication apparatus adjusts point of convergence using the first 2D image corresponding to the talker 10.

With respect to the stereoscopic camera 121, for the adjustment of a point of convergence, the preset feature points 511, 516, 611, 616 may be detected from the left-side images 510, 610 and the right-side images 515, 615, and at least one of the left-side images 510, 610 and the right-side images 515, 615 may be shifted using the detected feature points 511, 516, 611, 616 to thus adjust the points of convergence. The direction of shift may include at least one of upward, downward, rightward and leftward directions.

If the left-side images 510, 610 and the right-side images 515, 615 are shifted, empty areas 522, 527 may appear in black.

With respect to the depth camera unit 122, similarly to the stereoscopic camera 121, for the adjustment of point of convergence, the preset features 711, 716 may be detected from the left-side image 710 and the right-side image 715, and at least one of the left-side and right-side images 710, 715 is shifted using the detected feature point 711, 716 to thus adjust the point of convergence 721, 726.

If the left-side and right-side images 710, 716 are shifted, empty areas 722, 727 may appear in black.

The adjustment of point of convergence is described below with reference to FIG. 8B.

Referring to FIG. 8B, the first left-side and right-side images 500, 505 may be captured using light axes 121c, 121d of the left-side and right-side cameras 121 a, 121b of the stereoscopic camera 121, respectively.

The feature points 511, 611 of the left-side images 510, 610 and the feature points 516, 616 of the right-side images 515, 615 may be detected and the point of convergence may be adjusted in hardware manner using the detected feature points 511, 516, 611, 616.

Regarding hardware, a driving unit (not illustrated) may be implemented, which may include a motor (not illustrated) and a gear train (not illustrated) to shift the light axes corresponding to the left-side camera 121 a and the right-side camera 121 b.

For the adjustment of a point of convergence, the control unit 110 may adjust the light axes 121 c, 121d to new light axes 121 e, 121f according to an angle determined for adjustment of the point of convergence.

At operation S244 of FIG. 3, the 3D video communication apparatus distinguishes between the distance from the talker 10 to the 3D camera 120, and a region of a predetermined distance, respectively.

The object detecting unit 135 may distinguish between a first region corresponding to the talker 10 and a second region 531, 536, 631, 636, 731, 736 including the predetermined distance from the talker 10 to the direction of the 3D camera 120, respectively.

The predetermined distance may be 1m, for example. Further, the predetermined distance may vary depending on the setting of the 3D video communication apparatus.

The second region that includes the predetermined distance may be a 3D region (corresponding to x, y and z axes) included into a plurality of 2D images 530, 535, 630, 635, 730,735.

The distinguished second region may include a plurality of second regions, and may vary depending on the setting of the 3D video communication apparatus 100.

The operation S244 to distinguish the areas of the stereoscopic camera 121 and the depth camera unit 122 may be substantially similar to each other.

At operation S245 of FIG. 3, the 3D video communication apparatus detects an object located at a distance between the talker 10 and the 3D camera 120.

By using the object detecting unit 135, it is possible to detect the objects 541, 546, 641, 646, 741, 746 included in the second regions 531, 536, 631, 636, 731, 736.

The type, size or number of objects which may be detected by using the object detecting unit 135 is not limited.

A plurality of objects may be detected in the distinguished second regions 531, 536, 631, 636, 731, 736 and the target object for detection may be designated by setting the 3D video communication apparatus accordingly.

The operation S235 to detect the object by the stereoscopic camera 121 and by the depth camera unit 122 may be substantially similar to each other.

In another exemplary embodiment, the 3D video communication apparatus may divide layers with respect to the object detected in the distinguished region.

Referring to FIG. 6, the 3D video communication apparatus 100 may detect the objects 641, 646 located within the second regions 631, 636. The 3D video communication apparatus 100 may generate second layers 642, 647 corresponding to the detected objects 641, 646.

By adjusting a sense of depth of the objects 642, 647 corresponding to the second layers, a higher efficiency of video processing may be obtained. As explained above, an embodiment of generating a separate layer may be suitable for an example of a rather complex object.

At operation S246 of FIG. 3, the 3D video communication apparatus adjusts the original sense of depth of the objects 541, 546, 641, 646, 741, 746 to new senses of depth.

Regarding the adjustment of the sense of depth, the transmission image generating unit 140 may shift or enlarge the detected objects 541, 546, 641, 646, 741, 746 to new sizes.

The objects 551, 556, 651, 656, 751, 756 included in the left-side and right-side images 550, 650, 750, and 555, 655, 755 may be enlarged in at least one direction (e.g., +x, -x, +y, -y axes with respect to the object), or shifted in at least one direction.

A third 2D image 560, 565, 660, 665, 760, 765 may be generated when the adjustment of the sense of depth is completed.

The third 2D left-side and right-side images 560, 660, 750 and 565, 665, 765 with the adjusted sense of depth may be generated by overwriting with the result of the new sense of depth adjustment regarding the first 2D left-side and right-side images 500, 600, 700 and 505, 605, 705 captured through the 3D camera 120 or saving the result of the new sense of depth adjustment with new names.

The difference of the adjustment of the sense of depth may be confirmed by comparing the object of the third 2D image with the object of the second 2D image.

The difference of the adjustment of the sense of depth provides the listener 20 at video communication using the 3D video communication apparatus 200 with a differentiated 3D video effect.

Hardware is described below with reference to FIGS. 8B and 8C.

Referring to FIGS. 8B and 8C, for the stereoscopic camera 121, interocular distance (ID) between the left-side camera 121 a and the right-side camera 121b may be adjusted according to the control of the control unit 110.

The sense of depth of the left-side image of the left-side camera 121 a and that of the right-side image of the right-side camera 121b may be adjusted within an adjustment limit 121c as movable by the left-side and right-side cameras 121 a, 121 b.

Regarding hardware, a driving unit (not illustrated) may be implemented, which may include a motor (not illustrated) and a gear train (not illustrated) to adjust the distance between the left-side camera 121 a and the right-side camera 121 b.

If a distance between the left-side and right-side cameras 121 a, 121b increases, the disparity increases accordingly. If the distance between the left-side and right-side cameras 121 a, 121b decreases, the disparity decreases accordingly.

In other exemplary embodiments, the transmission image generating unit 140 maintains the original sense of depth for the first layers, and adjusts to a new sense of depth regarding objects 642, 647 corresponding to the second layers.

Adjustment of the sense of depth may include shifting or enlarging of the detected objects 641, 646.

The operation S250 of FIG. 2 proceeds when the operation S236 to adjust the sense of depth is competed.

Accordingly, at operation S250 of FIG. 2, the 3D video communication apparatus generates a 3D transmission image.

The second or third 3D talker image may be transmitted to the 3D video communication apparatus 200 of the listener 20 via the transmitting/receiving unit 150.

The third 3D talker image 10a may be directly displayed on the display unit 270 of the 3D video communication apparatus 200 of the listener 20.

At operation S260 of FIG. 2, the 3D video communication apparatus transmits the 3D talker transmission image and receives 3D listener image.

Depending on a setting of the 3D video communication apparatus, the second or third 3D talker image and voice of the talker 10 may be converted into a transmission format corresponding to wired/wireless network and selectively transmitted to the transmitting/receiving unit 250 of the 3D video communication apparatus 200 of the listener 20.

Depending on a setting of the 3D video communication apparatus, the transmitting/receiving unit 150 may receive from the transmitting/receiving unit 250 of the 3D video communication apparatus 200 of the listener 20 the second 3D listener image (not illustrated) corresponding to the second 3D talker image or the third 3D listener image 20a corresponding to the third 3D talker image, and the voice of the listener 20.

The transmitting/receiving unit 150 may decode the second or third 3D talker image or voice, which was converted into a transmission format corresponding to the wired/wireless network, into second or third 3D listener image or voice.

The decoded second or third 3D talker image or voice may be stored at the storage unit 180.

The transmitting/receiving unit 150 may transmit the first 2D image stored at the storage unit 180 or generated first to third 3D talker images to an external apparatus (not illustrated) using wired/wireless network.

The received second 3D listener image (not illustrated) or the third 3D listener image 20a, and the voice of the listener 20 may be stored at the storage unit 180 according to the control of the control unit 110.

At operation S270 of FIG. 2, the 3D video communication apparatus may generate an output image and display it on the display unit 170.

The output image generating unit 160 may generate output images 10a, 10b, 20a to be displayed on the display unit 170.

The output images 10a, 10b, 20a may include the first and third 3D talker images generated at the transmission image generating unit 140 or the second and third 3D listener images received at the transmitting/receiving unit 150.

Depending on a setting of the 3D video communication apparatus, the output image generating unit 160 may display the first and second 3D talker images and the received first and second 3D listener images as the output images 10a, 20a in accordance with the size of the display unit 170, size (horizontal x vertical) and location of the talker display region 170a and size (horizontal x vertical) and location of the listener display region 170b of the display unit 170.

Since the second 3D talker image or the second 3D listener image has already been generated as the output image, the above image may be displayed on the display unit 170 in accordance with the size of the display unit 170, size (horizontal x vertical) and location of the talker display region 170a and size (horizontal x vertical) and location of the listener display region.

In another exemplary embodiment, the output image generating unit 160 may generate the output image 10b using the second 2D image (i.e., first 3D talker image) and display the generated image 10b on the listener display region 170a.

At operation S280 of FIG. 2, the 3D video communication apparatus determines if the video communication is finished.

Determining if the video communication of the 3D video communication apparatuses 100, 200 is finished may be performed by receiving an input corresponding to ending of video communication by the talker 10 or the listener 20. Alternatively, whether the video communication is finished may be determined based on a disconnection state of wired/wireless network between the 3D video communication apparatus 100 of the talker 10 and the 3D video communication apparatus 200 of the listener 20.

If the 3D video communication apparatuses 100, 200 receive an input corresponding to an ending of the video communication from the talker 10 or the listener 20, the 3D video communication apparatuses 100, 200 may notify the same to the counterpart 3D video communication apparatuses 100, 200.

If the video communication is not finished, the operation proceeds to operation S240 to continue video communication. If the video communication is finished, the process proceeds to operation S290.

At operation S290 of FIG. 2, the 3D video communication apparatus logs out from the video communication service.

The 3D video communication apparatus 100 receives a talker's logout input regarding the video communication service and accordingly logs out and finishes the operation.

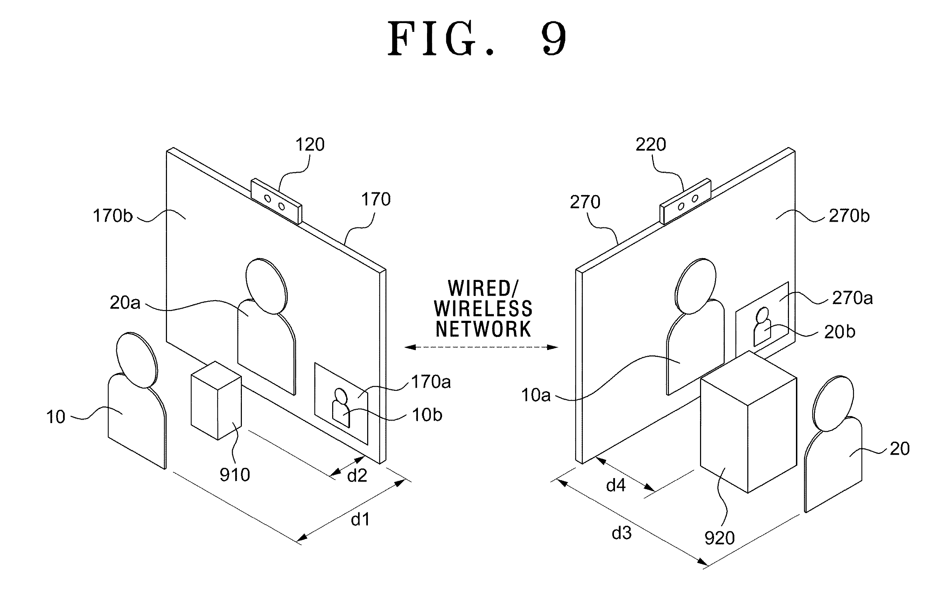

FIG. 9 illustrates an example of displaying the result of video processing at the 3D video communication apparatus of the talker 10 on the 3D video communication apparatus of the listener 20, according to an exemplary embodiment.

Referring to FIG. 9, the 3D video communication apparatus 100 for 3D video communication may capture the first 2D image of the talker 10 using the 3D camera 120.

Using the captured first 2D image, the 3D video communication apparatus 100 of the talker 10 may carry out a video processing including adjustment of point of convergence or sense of depth regarding an object 910 located (at a distance (d1-d2) between the talker 10 and the 3D camera 120.

Although the display unit 170 shows the listener display region 170b larger than the talker display region 170a, the size or the location of the talker or listener display region 170a, 170b may vary depending on setting.

The transmitting/receiving unit 150 of the 3D video communication apparatus 100 of the talker 10 transmits the second or third 3D talker image to the transmitting/receiving unit 250 of the 3D video communication apparatus 200 using the wired/wireless network, and the 3D video communication apparatus of the listener 20 may store the received second and third 3D talker images at the storage unit 280.

The 3D video communication apparatus 200 of the listener 20 may display the output image 10a generated using the second 3D talker image or the third 3D talker image 10a.

In the output image 10a displayed on the display unit 270, the object 920 with the adjusted sense of depth may provide the feeling as if the object 920 is located before the listener 20 at a distance (d3-d4) between the listener 20 and the 3D camera 220.

In the 3D video communication apparatus 200 of the listener, the distance (d4) between the 3D camera 220 and the object 920 is generated by the adjustment of the depth of the 3D video communication apparatus 100 of the talker 10.

The distance (d3-d4) between the object 920 and the listener 20 is decreased to be narrower than the distance (d1-d2) between the object 910 and the talker 10, and thus it may be felt as if the object is closer to the listener 20.

The listener 20 may feel strong differentiated 3D video effect due to the object 920 with the new sense of depth (d4) displayed on the display unit 270 of the 3D video communication apparatus 200 of the listener 20.

The 3D video communication apparatus 200 of the listener 20 may compute a distance (d3) between the listener 20 and the 3D camera 220. The distance (d3) between the listener 20 and the 3D camera 220 may be substantially identical to or smaller than the distance (d4) between the object 920 with the adjusted sense of depth and the 3D camera 220.

In the above example, the 3D video communication apparatus 200 of the listener 20 may notify the listener 20 to increase the distance (d3) to the 3D camera 220 through the display unit 270 or the speaker 295.

Further, the output image 10a may be displayed on a reference plane of the display unit 270 of the 3D video communication apparatus 200 of the listener 20, and the object 920 with the new sense of depth may be displayed on a front side with reference to the reference plane (i.e., in a direction of the listener 20 on the reference plane of the display unit 270 (+z axis direction)) distinguishably from the 3D talker image 10a.

Further, the object 920 with the adjusted new sense of depth may be displayed on the reference plane of the display unit 270 of the 3D video communication apparatus 200 of the listener 20, and the output image 10a may be displayed on a back side of the reference plane (i.e., direction opposite to the listener 10 on the reference plane of the display unit 270 (-z axis direction)) distinguishably from the 3D talker image 10a.

Methods according to exemplary embodiments may be implemented in the form of program commands to be executed through a variety of computing means and recorded on a computer-readable medium. The computer-readable medium may include program command, data file, or data structure singularly or in combination. The program command recorded on said medium may be designed and constructed specifically for the embodiment, or those which are known and available among those skilled in the computer software area.

Although a few preferred embodiments have been shown and described, it will be appreciated by those skilled in the art that various changes and modifications might be made without departing from the scope of the invention, as defined in the appended claims.

## Claims

1. A video communication method of a three dimensional (3D) video communication apparatus connectable to a 3D camera, the video communication method comprising:
acquiring a plurality of two dimensional (2D) images corresponding to a talker using the 3D camera;
detecting an object located between the talker and the 3D camera using the acquired plurality of 2D images;
scaling an original sense of depth of the detected object to a new sense of depth; and
generating a 3D talker image including the object with the new sense of depth and transmitting the 3D talker image to a 3D video communication apparatus of a listener.

2. The video communication method of claim 1, further comprising
adjusting a point of convergence of the plurality of 2D images using a preset feature point of the talker; and
setting the preset feature point of the talker;
wherein the preset feature point comprises at least one of eyes, nose, lips, ears and eyebrows of the talker.

3. The video communication method of claim 1 or 2, further comprising receiving a 3D listener image from the 3D video communication apparatus of the listener, and displaying the 3D listener image or the 3D talker image on a display unit.

4. The video communication method in one of claims 1 to 3, wherein the 3D camera is a stereoscopic camera or a depth camera unit.

5. The video communication method in one of claims 1 to 4, further comprising computing a distance between the 3D camera and the talker, wherein the distance is computed using disparity or depth information of the plurality of 2D images.

6. The video communication method in one of claims 1 to 5, wherein the 3D talker image is displayed on a reference plane of a display unit of the 3D video communication apparatus of the listener, and an object having the new sense of depth is displayed on a front side of the reference plane (+z axis direction) distinguishably from the 3D talker image.

7. The video communication method in one of claims 1 to 6, wherein an object having the new sense of depth is displayed on a reference plane of the display unit of the 3D video communication apparatus of the listener, and the 3D talker image is displayed on a back side of the reference plane (-z axis direction) distinguishably from the object with the adjusted sense of depth.

8. The video communication method of claim 4, wherein the adjusting comprises adjusting by shifting a left-side image and a right-side image acquired from the stereoscopic camera or the depth camera unit using the preset feature point, or rotating at least one of light axes of a left-side camera and a right-side camera of the stereoscopic camera.

9. The video communication method of claim 4, wherein the scaling comprises enlarging or shifting the detected object of a left-side image and the detected object of a right-side image acquired from the stereoscopic camera or the depth camera unit, or adjusting at least one distance from among a light axis of a left-side camera and a light axis of a right-side camera of the stereoscopic camera.

10. The video communication method of claim 4, wherein the scaling comprises enlarging, by adding a predetermined ratio corresponding to a size of the detected object of a left-side image and a size of the detected object of a right-side image acquired at the stereoscopic camera or the depth camera unit, or enlarging the detected object of the left-side image and the detected object of the right-side image to a predetermined size.

11. The video communication method in one of claims 1 to 10, wherein the 3D camera is integrally formed in the 3D video communication apparatus.

12. A three dimensional (3D) video communication apparatus comprising a display unit which displays a 3D image, the 3D video communication apparatus comprising:
a storage unit; and
a control unit which controls the 3D camera and the storage unit, wherein the control unit detects an object located between the talker and the 3D camera, scales an original sense of depth of the detected object to a new sense of depth, and generates a 3D talker image including the object with the new sense of depth from the plurality of 2D images.

13. The 3D video communication apparatus of claim 12,
wherein the control unit adjusts a point of convergence of a plurality of two dimensional (2D) images using a preset feature point of a talker,
and further comprising a transmitting/receiving unit which transmits the 3D talker image to a 3D video communication apparatus of a listener during video communication with the talker and receives a 3D listener image from the 3D video communication apparatus of the listener, wherein
the display unit displays the 3D talker image or the received 3D listener image.

14. The 3D video communication apparatus of claim 12 or 13, wherein the display unit displays a user interface (Ul) screen to set a feature point of the talker and the feature point is inputted using the Ul screen.

15. The 3D video communication apparatus in one of claims 12 to 14, wherein the control unit computes a distance between the 3D camera and the talker using the plurality of
2D images and detects the object using the computed distance.
